# EUROPEAN PATENT APPLICATION

(11) **EP 2 388 497 A1**
(43) Date of publication of application: **23.11.2011**
(21) Application number: 11003893.2
(22) Date of filing: 11.05.2011
(51) Int. Cl.: F16H 61/00, F16H 61/686, F16H 63/34, F16D 65/14

(54) **Parking mechanism for transmission**

(30) Priority: 19.05.2010 JP 2010115110; 28.04.2011 JP 2011100943
(71) Applicant: JATCO Ltd, Fuji-shi, Shizuoka 417-8585 (JP)
(72) Inventor: Unno, Takehiro, Fuji-shi Shizuoka 417-8585 (JP); Idebuchi, Koji, Fuji-shi Shizuoka 417-8585 (JP); Kobayashi, Katsuya, Fuji-shi Shizuoka 417-8585 (JP); Nakano, Yusuke, Fuji-shi Shizuoka 417-8585 (JP)
(74) Representative: Hager, Thomas Johannes

(57) **Abstract**

A parking mechanism of a transmission (30) with a planetary gear mechanism (31) for speed changing and outputting the rotation of a driving force source (20), includes a plurality of friction elements (33,34) which change a speed ratio of the planetary gear mechanism by being engaged or released; and an engaging unit which engages the friction elements. The engaging unit maintains at least two interlock friction elements, which are engaged to interlock the transmission, out of the plurality of friction elements in engaged states when the operation of the driving force source stops due to a key-off operation.

## Description

### FIELD OF THE INVENTION

The present invention relates to a parking mechanism used in a transmission installed in a vehicle.

### BACKGROUND OF THE INVENTION

A transmission installed in a vehicle includes a parking mechanism for maintaining the vehicle in a stopped state by preventing the rotation of an output shaft.

JP58-207578A discloses a parking mechanism for automatic transmission. The parking mechanism locks a vehicle by moving a cam by a cammed rod, which operates in tandem with a shift lever, and engaging a claw with a parking gear provided in the transmission.

### SUMMARY OF THE INVENTION

Since a conventional parking mechanism is composed of many parts such as a parking gear, a parking pole, a rod and a cam, manufacturing cost of a transmission increases. Further, miniaturization of the transmission is difficult due to many parts.

If dimensional accuracy of the parts is low, the parking mechanism might experience such a state where the parking pole cannot be disengaged from the parking gear or a parking state cannot be attained because the parking pole cannot be engaged with the parking gear. Thus, high machining accuracy is required for parts, which leads to a further increase in the manufacturing cost of the transmission.

An object of the present invention is to reduce the number of parts constituting a parking mechanism.

According to an aspect of the present invention, a parking mechanism of a transmission with a planetary gear mechanism for speed changing and outputting the rotation of a driving force source, is provided. The parking mechanism includes a plurality of friction elements which change a speed ratio of the planetary gear mechanism by being engaged or released; and an engaging unit which engages the friction elements. The engaging unit maintains at least two interlock friction elements, which are engaged to interlock the transmission, out of the plurality of friction elements in engaged states when the operation of the driving force source stops due to a key-off operation.

Embodiments and advantages of this invention will be described in detail below with reference to the attached figures.

### BRIEF DESCRIPTION OF THE DRAWINGS

FIG. 1 is a schematic diagram of a vehicle speed reduction unit (first embodiment).

FIG. 2 is a sectional view of a transmission with a parking mechanism (first embodiment).

FIG. 3 is a flow chart of a parking process (first embodiment).

FIG. 4 is a sectional view of a transmission (second embodiment).

FIG. 5 is a schematic diagram of an engagement mechanism for a high brake (second embodiment).

FIGS. 6A and 6B are schematic diagrams of a loading mechanism (second embodiment).

### DESCRIPTION OF THE PREFERRED EMBODIMENTS

Hereinafter, embodiments of the present invention are described with reference to the drawings.

### First Embodiment

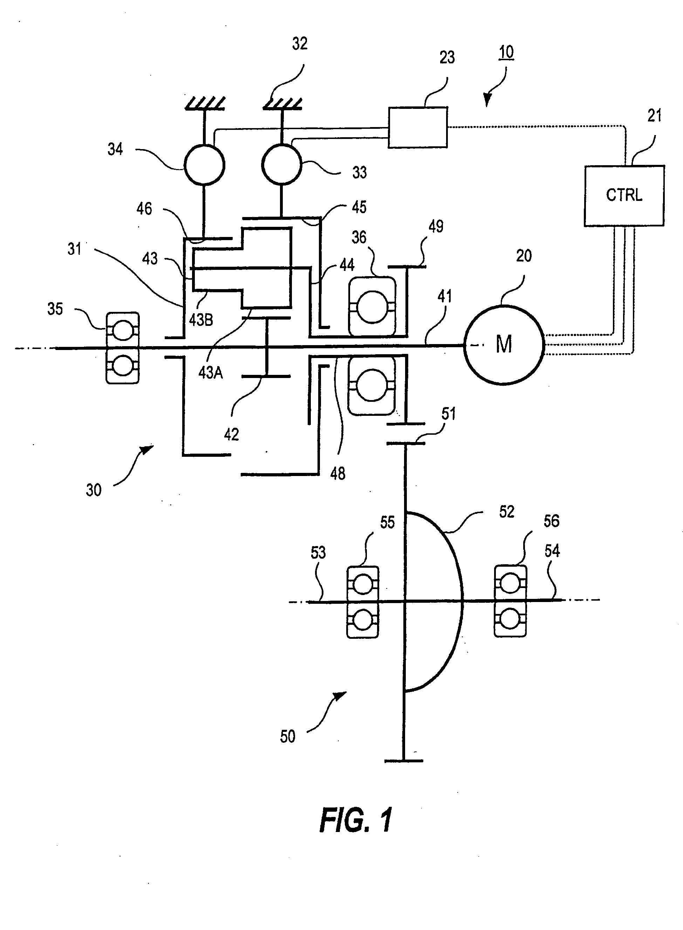

FIG. 1 is a schematic diagram of a vehicle speed reduction unit 10.

The vehicle speed reduction unit 10 includes a motor 20 as a driving force source, a transmission 30 with a planetary gear mechanism 31 and a final speed reduction mechanism 50 for outputting a decelerated driving force to drive shafts 53, 54.

The motor 20 is rotated to generate a driving force by having power supplied by a controller 21. The motor 20 is, for example, a three-phase brushless motor. The controller 21 controls the driving force of the motor 20 by supplying power to the motor, for example, through a PWM control by an inverter.

The controller 21 instructs a control circuit 23 to engage and release a high brake 33 and a low brake 34 to be described later. In response to this instruction, the control circuit 23 outputs hydraulic pressures and command signals to the high brake 33 and the low brake 34.

The transmission 30 includes the planetary gear mechanism 31 housed in a case 32. The transmission 30 decelerates rotation input to an input shaft 41 by the planetary gear mechanism 31, and transmits the decelerated rotation to the final speed reduction mechanism 50 via an output shaft 48 and an output gear 49. The final speed reduction mechanism 50 includes a differential mechanism 52 which allows a differential between the left drive shaft 53 and the right drive shaft 54, and transmits the driving force to the left drive shaft 53 and the right drive shaft 54.

The planetary gear mechanism 31 includes a sun gear 42 coupled to the input shaft 41, pinions 43 engaged with the sun gear 42 and a first ring gear 45 and a second ring gear 46 engaged with the pinions 43.

The sun gear 42 is coupled to the input shaft 41 to which the driving force of the motor 20 is input, and rotates together with the input shaft 41.

The pinion 43 is a stepped pinion in which a first gear 43A engaged with the sun gear 42 and a second gear 43B having a smaller number of teeth than the first gear 43A are coaxially arranged. The pinion 43 includes the first gear 43A at a side of the motor 20 (front side) and the second gear 43B at a side opposite to the motor 20 (rear side).

A carrier 44 for transmitting a revolving motion of the pinion 43 to the output shaft 48 is provided at the front side of the pinion 43. The carrier 44 is coupled to the output shaft 48.

The output shaft 48 is a hollow shaft, through the interior of which the input shaft 41 is passed, and is coupled to the output gear 49. The input shaft 41 is supported by a bearing 35. The output shaft 48 is supported by a bearing 36.

The first ring gear 45 is engaged with the first gear 43A of the pinion 43. The second ring gear 46 is disposed rearwardly of the first ring gear 45 and engaged with the second gear 43B of the pinion 43.

The high brake 33 as a friction element for stopping relative rotation of the first ring gear 45 and the case 32 and the low brake 34 as a friction element for stopping relative rotation of the second ring gear 46 and the case 32 are provided in the case 32.

When the high brake 33 is engaged, the first ring gear 45 is caught by the case 32 to stop the rotation thereof. When the low brake 34 is engaged, the second ring gear 46 is caught by the case 32 to stop the rotation thereof.

The output gear 49 is engaged with a gear 51 of the final speed reduction mechanism 50. The driving force transmitted to the gear 51 is transmitted to the left and right drive shafts 53 and 54 with a differential allowed by the differential mechanism 52. The left and right drive shafts 53 and 54 are respectively supported by bearings 55 and 56.

According to the above construction, the transmission 30 can switch a speed ratio in two stages by causing either one of the high brake 33 and the low brake 34 to be engaged and stopping the rotation of either one of the first and second ring gears 45, 46.

When the high brake 33 is released and the low brake 34 is engaged, the second ring gear 46 is in a non-rotating state. This state is called a "low mode".

In the low mode, the driving force input to the sun gear 42 is transmitted to the pinion 43 by the first gear 43A. The pinion 43 rotates along inner teeth of the second ring gear 46 in the non-rotating state and the revolving motion of the pinion 43 is transmitted to the carrier 44. The driving force transmitted to the carrier 44 is transmitted from the output shaft 48 to the final speed reduction mechanism 50.

Since the second ring gear 46 is fixed in the low mode, a speed reduction ratio of the rotational force input to the input shaft 41 and that output from the output shaft is determined by teeth numbers of the sun gear 42 and the second ring gear 46.

In other words, the speed reduction ratio between the input shaft 41 and the output shaft 48 in the low mode is 1:(1+(teeth number of the second ring gear 46 ÷ teeth number of the sun gear 42)). The rotation decelerated by this speed reduction ratio is output to the output shaft 48.

When the high brake 33 is engaged and the low brake 34 is released, the first ring gear 45 is in a non-rotating state. This state is called a "high mode".

In the high mode, the driving force input to the sun gear 42 is transmitted to the pinion 43 by the first gear 43A. The pinion 43 rotates along inner teeth of the first ring gear 45 in the non-rotating state and the revolving motion thereof is transmitted to the carrier 44. The driving force transmitted to the carrier 44 is transmitted from the output shaft 48 to the final speed reduction mechanism 50.

Since the first ring gear 45 is fixed in the high mode, a speed reduction ratio of the rotational force input to the input shaft 41 and that output from the output shaft is determined by a relationship between the sun gear 42 and the first ring gear 45.

In other words, the speed reduction ratio between the input shaft 41 and the output shaft 48 in the high mode is 1:(1+(teeth number of the first ring gear 45 ÷ teeth number of the sun gear 42)). The rotation decelerated by this speed reduction ratio is output to the output shaft 48.

The transmission 30 can switch the speed reduction ratio by causing either one of the high brake 33 and the low brake 34 to be engaged and, particularly, can make the speed reduction ratio in the low mode larger than that in the high mode by selecting the teeth number of the pinion 43.

When the high brake 33 and the low brake 34 are simultaneously engaged, the rotations of the first and second ring gears 45, 46 are both stopped, thereby entering a so-called interlocked state where the carrier 44 is fixed by a difference between the teeth number of the first ring gear 45 and that of the second ring gear 46.

In the interlocked state, the output shaft 48 is fixed in a non-rotating state. In the present invention, a parking mechanism of the transmission 30 is realized, utilizing this.

However, in the case of utilization as the parking mechanism, the high brake 33 and the low brake 34 need to be maintained in the engaged states even after functions of the vehicle stop due to a key-off operation such as turning off of a main switch of the vehicle or turning off of an ignition and the operations of the controller 21, the control circuit 23 and the like stop. Accordingly, the transmission 30 realizes the parking mechanism by a construction described below.

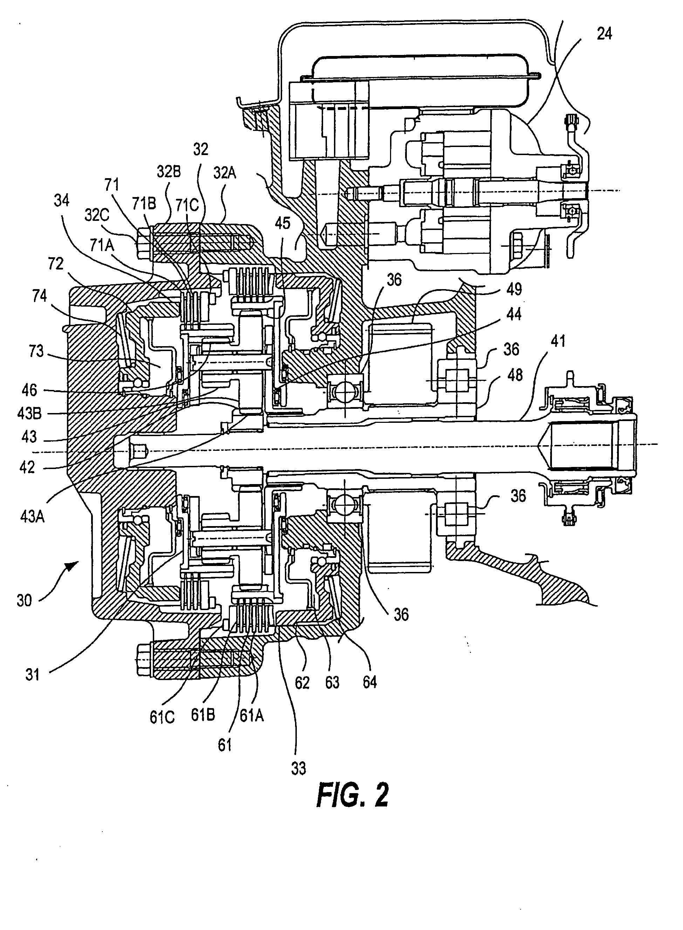

FIG. 2 is a sectional view of the transmission 30.

The transmission 30 includes the planetary gear mechanism 31 housed in the case 32 as described above. The case 32 is divided into a front case 32A and a rear case 32B, which are coupled by bolts 32.

The transmission 30 includes a hydraulic pump 24 for supplying hydraulic oil for controlling the engaged states of the high brake 33 and the low brake 34 at a predetermined pressure. The control circuit 23 is constructed by the hydraulic pump 24 and an unillustrated regulator.

First, the construction of the high brake 33 is described. The high brake 33 includes a multiple-disc clutch 61, a piston 62, a hydraulic chamber 63 and a disc spring 64.

The multiple-disc clutch 61 is formed by alternately placing annular case side friction plates 61A slidably mounted in the case 32 and annular ring-gear side friction plates 61B slidably mounted on the first ring gear 45.

The case side friction plates 61A and the ring-gear side friction plates 61B have moving ranges thereof toward the front and rear sides restricted by retainers 61C.

The piston 62 presses the multiple-disc clutch 61 toward an engaging side by a biasing force of the disc spring 64. The piston 62 moves toward a releasing side of the multiple-disc clutch 61 by a hydraulic pressure in the hydraulic chamber 63, thereby releasing the multiple-disc clutch 61. Based on the magnitude of the hydraulic pressure in the hydraulic chamber 63, the magnitude of an engagement force of the multiple-disc clutch 61 can be controlled.

Particularly, when no hydraulic pressure is supplied to the hydraulic chamber 63, the piston 62 presses the multiple-disc clutch 61 by the biasing force of the disc spring 64 to maintain the multiple-disc clutch 61 in the engaged state. In other words, the high brake 33 is normally closed.

Similarly, the low brake 34 includes a multiple-disc clutch 71, a piston 72, a hydraulic chamber 73 and a disc spring 74.

The multiple-disc clutch 71 is formed by alternately placing annular case side friction plates 71A slidably mounted in the case 32 and annular ring-gear side friction plates 71B slidably mounted on the second ring gear 46.

The case side friction plates 71A and the ring-gear side friction plates 71B have moving ranges thereof toward the front and rear sides restricted by retainers 71C.

The piston 72 presses the multiple-disc clutch 71 toward an engaging side by a biasing force of the disc spring 74. The piston 72 moves toward a releasing side of the multiple-disc clutch 71 due to a hydraulic pressure in the hydraulic chamber 73, thereby releasing the multiple-disc clutch 71. Based on the magnitude of the hydraulic pressure in the hydraulic chamber 73, the magnitude of an engagement force of the multiple-disc clutch 71 can be controlled.

Also for the low brake 34, similar to the high brake 33, the multiple-disc clutch 71 is maintained in the engaged state by the biasing force of the disc spring 74 when no hydraulic pressure is supplied to the hydraulic chamber 73. In other words, the low brake 34 is normally closed.

The engagement and release of the high brake 33 and the low brake 34 are controlled based on the hydraulic pressures supplied from the control circuit 23. The low mode is set when only the low brake 34 is engaged, whereas the high mode is set when only the high brake 33 is engaged.

When both the high brake 33 and the low brake 34 are engaged, the planetary gear mechanism 31 is interlocked due to a difference between the teeth numbers of the first and second gears 43A, 43B of the pinion 43. The parking mechanism is realized, utilizing this.

Specifically, the hydraulic pressure is controlled to be zero by draining both the hydraulic pressure in the hydraulic chamber 63 of the high brake 33 and that in the hydraulic chamber 73 of the low brake 34. In this way, the pistons 62 and 72 are moved in engaging directions by the biasing force of the disc spring 64 and the disc spring 74 and both the high brake 33 and the low brake 34 are engaged.

As a result, the planetary gear mechanism 31 is interlocked to set a parking state. Since the high brake 33 and the low brake 34 are normally closed, the engaged states are maintained until the hydraulic pressures are supplied once the engaged states are set. Even in a state where the functions of the vehicle stop due to a key-off operation and the operations of the driving force source 20, the controller 21 and the control circuit 23 are all stopped, the engaged states of the high brake 33 and the low brake 34 are maintained to maintain the parking state.

Next, the operation of the controller 21 is described.

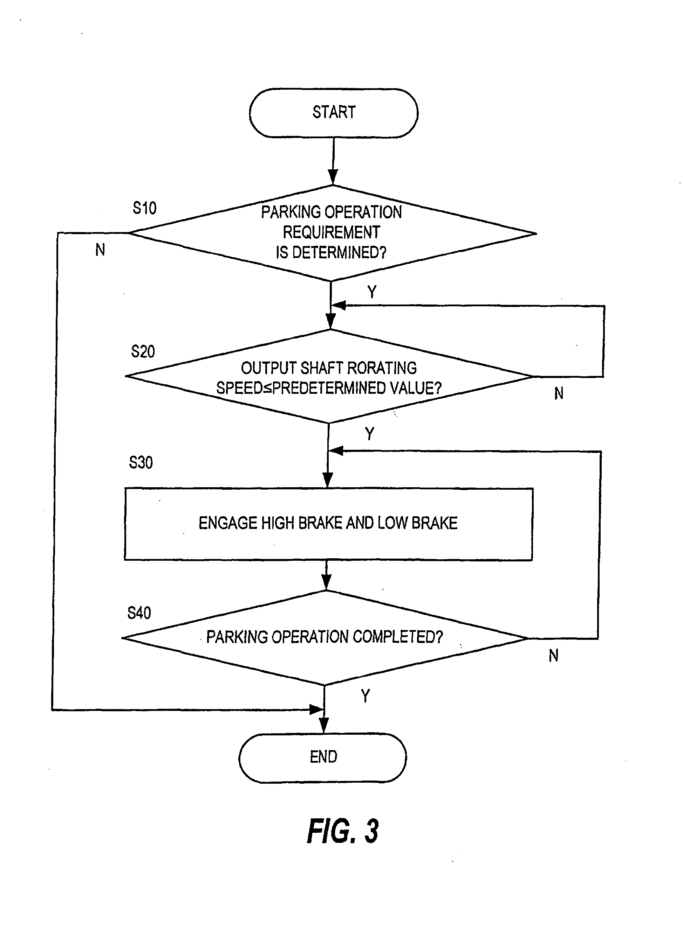

FIG. 3 is a flow chart of a parking process performed by the controller 21. This flow chart is performed in a predetermined cycle (e.g. at intervals of 10 ms) by the controller 21.

The controller 21 determines whether or not there is any parking operation requirement (Step S10). The process proceeds to Step S20 if the presence of the parking operation requirement is determined, whereas the process is ended if the absence of the parking operation requirement is determined.

The controller 21 determines the presence of the parking operation requirement upon detecting that a driver operated a selector to a stop position.

Subsequently, the controller 21 determines whether or not a rotating speed of the output shaft of the transmission 30 is equal to or lower than a predetermined value (S20). The process proceeds to Step S30 if the rotating speed of the output shaft of the transmission 30 is determined to be equal to or lower than the predetermined value, whereas the process of Step S20 is repeated if the rotating speed of the output shaft of the transmission 30 is higher than the predetermined value.

Since the parking operation is prohibited while the vehicle is driving, it is permitted only when the vehicle is determined to be at a stop (including driving at a very slow speed). The predetermined value is, for example, set at about several km/h.

The controller 21 controls and sets the high brake 33 and the low brake 34 in the engaged states (S30) if the rotating speed of the output shaft of the transmission 30 is determined to be equal to or lower than the predetermined value in Step S20.

Specifically, the controller 21 instructs the control circuit 23 to engage the high brake 33 and the low brake 34. The control circuit 23 controls the hydraulic pressures to zero by draining the high brake 33 and the low brake 34 in accordance with this instruction. By this control, the high brake 33 and the low brake 34 have the hydraulic pressures in the hydraulic chambers 63, 73 controlled to zero and are engaged by the biasing forces of the disc springs 64, 74.

Subsequently, the controller 21 determines whether or not the parking operation has been completed (S40). The process of this flow chart is ended if the parking operation is determined to have been completed. Steps S30 and S40 are repeated unless the parking operation is determined to have been completed.

The controller 21 determines whether or not the parking operation has been completed based on whether or not the high brake 33 and the low brake 34 have been engaged. For example, the controller 21 determines that the parking operation has been completed when a condition such as the elapse of a predetermined time after the drain control of the high brake 33 and the low brake 34 or fall of a difference between an input rotating speed and an output rotating speed of the transmission 30 to or below a predetermined rotating speed is satisfied.

The controller 21 controls and sets both the high brake 33 and the low brake 34 in the engaged states and sets the transmission 30 in the interlocked state as in the flow chart shown in FIG. 3, whereby the transmission 30 can be set in the parking state.

As described above, in the transmission 30 including the planetary gear mechanism 31, the parking mechanism of the transmission 30 is realized by engaging both of at least two interlock friction elements (high brake 33 and low brake 34), which are engaged to set the interlocked state, out of friction elements which change a speed ratio of the transmission 30.

Since all parts for the parking mechanism can be omitted in the transmission 30, the transmission 30 can be miniaturized and manufacturing cost thereof can be reduced.

These friction elements are normally closed which are engaged with the supply of the hydraulic pressure stopped. Thus, the interlock friction elements can be maintained in the engaged states even if the functions of the vehicle stop due to a key-off operation and the operations of the hydraulic pump 24, the controller 21 and the like stop.

### Second Embodiment

Next, a second embodiment is described. In the second embodiment, a structure for engaging the high brake 33 and the low brake 34 in the transmission 30 is different.

A basic construction of the second embodiment is common to that of the first embodiment shown in FIG. 1. The same construction as the first embodiment is denoted by the same reference numerals and not described.

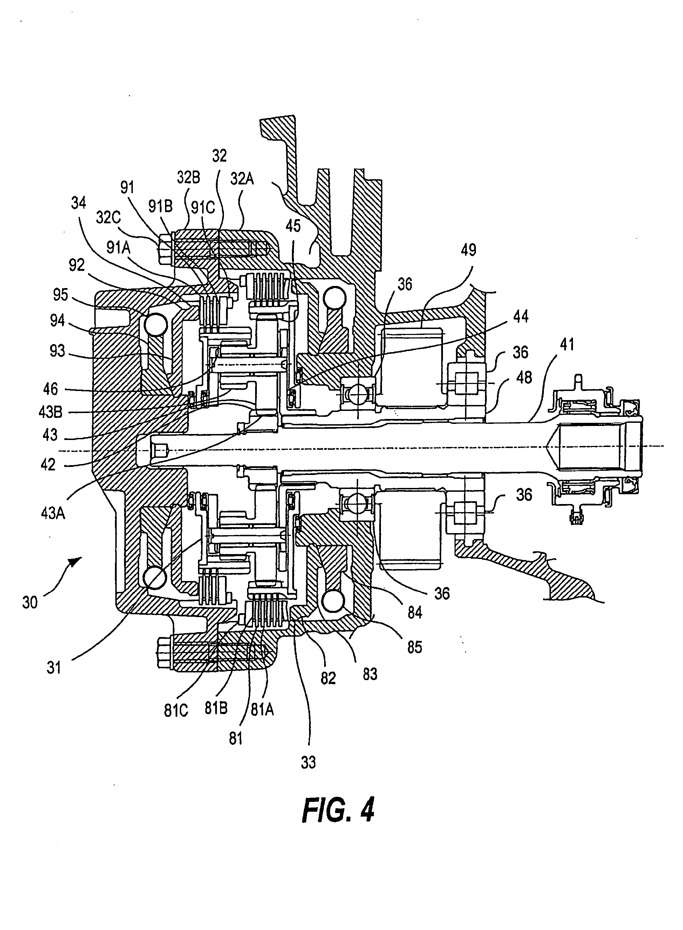

FIG. 4 is a sectional view of the transmission 30.

Similar to FIG. 2 showing the first embodiment described above, the planetary gear mechanism 31 of the transmission 30 is housed in the case 32. The case 32 is divided into the front case 32A and the rear case 32B, which are coupled by bolts 32C. Unlike the first embodiment, the transmission 30 does not include the hydraulic pump 24.

First, the construction of the high brake 33 is described. The high brake 33 includes a multiple-disc clutch 81, a piston 82, a plate 83, a loading cam 84 and an actuator 85.

Similar to the multiple-disc clutch 61 of the first embodiment, the multiple-disc clutch 81 includes annular case side friction plates 81A slidably mounted in the case 32, annular ring-gear side friction plates 81B slidably mounted on the first ring gear 45 and retainers 81C for restricting moving ranges toward front and rear sides.

The actuator 85 rotates the loading cam 84. The loading cam 84 is rotated by the actuator 85, thereby sliding the plate 83 in an axial direction.

The piston 82 is coupled to the plate 83. The piston 82 presses the multiple-disc clutch 81 toward an engaging side by a sliding movement of the plate 83 in an engaging direction.

Specifically, the actuator 85 rotates the loading cam 84 at a predetermined angle in a predetermined direction, whereby the plate 83 slides in an engaging direction of the multiple-disc clutch 81 and the piston 82 presses the multiple-disc clutch 81 to engage the multiple-disc clutch 81.

On the other hand, the actuator 85 rotates the loading cam 84 at a predetermined angle in a direction opposite to the predetermined direction, whereby the plate 83 slides in a releasing direction of the multiple-disc clutch 81 and the piston 82 moves in the releasing direction to release the multiple-disc clutch 81. The magnitude of an engagement force of the multiple-disc clutch 81 can be controlled based on the magnitude of an angle at which the actuator 85 rotates the loading cam 84.

The construction of the low brake 34 is similar to that of the high brake 33. The low brake 34 includes a multiple-disc clutch 91, a piston 92, a plate 93, a loading cam 94 and an actuator 95.

The multiple-disc clutch 91 includes annular case side friction plates 91A slidably mounted in the case 32, annular ring-gear side friction plates 91B slidably mounted on the second ring gear 46 and retainers 91C for restricting moving ranges toward the front and rear sides.

The actuator 95 rotates the loading cam 94. The loading cam 94 is rotated by the actuator 95, thereby sliding the plate 93 in an axial direction.

Accordingly, similar to the high brake 33, the actuator 95 rotates the loading cam 94 at a predetermined angle in a predetermined direction, whereby the piston 92 presses the multiple-disc clutch 91 to engage the multiple-disc clutch 91.

On the other hand, the actuator 95 rotates the loading cam 94 by a predetermined angle in a direction opposite to the predetermined direction, whereby the piston 92 slides in a releasing direction of the multiple-disc clutch 91 to release the multiple-disc clutch 91. The magnitude of an engagement force of the multiple-disc clutch 91 can be controlled based on the magnitude of an angle by which the actuator 95 rotates the loading cam 94.

The control circuit 23 controls command signals (power) supplied to the actuators 85, 95.

The engagement and release of the high brake 33 and the low brake 34 are controlled by the operation of the actuators 85, 95 based on power supplied from the control circuit 23. A low mode is set when the low brake 34 is engaged, whereas a high mode is set when the high brake 33 is engaged.

By controlling both the command signal to the actuator 85 of the high brake 33 and the command signal to the actuator 95 of the low brake 34 to be at maximal engagement sides, the pistons 82, 92 move in the engaging directions to engage the high brake 33 and the low brake 34.

By this, the planetary gear mechanism 31 is interlocked and operates as a parking brake.

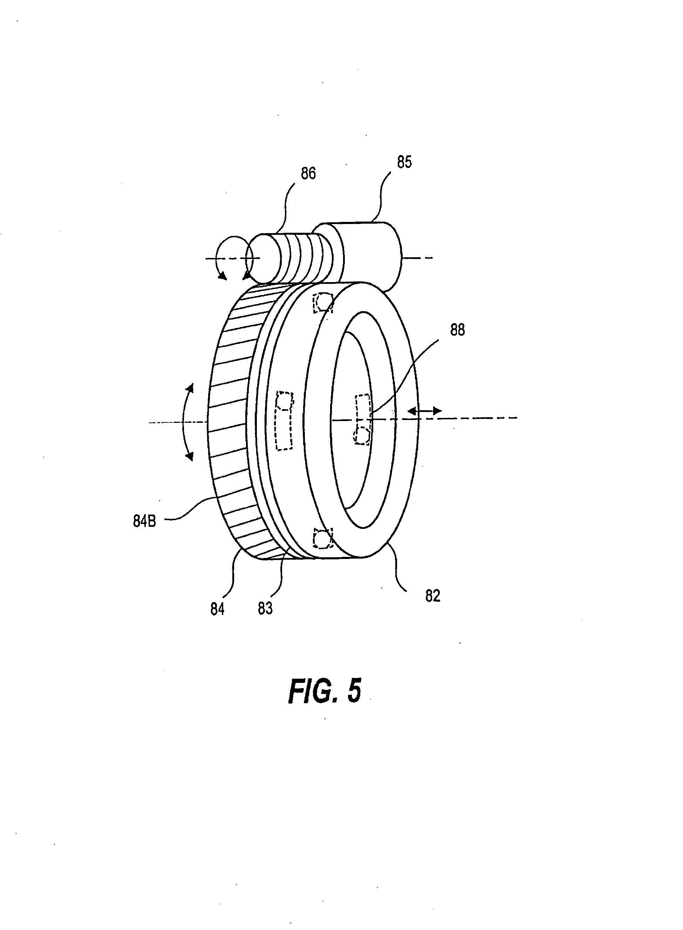

FIG. 5 is a schematic diagram of an engagement mechanism for the high brake 33. Although the engagement mechanism for the high brake 33 is described as a representative here, the construction of an engagement mechanism for the low brake 34 is similar.

The disc-shaped loading cam 84 is coaxial with the input shaft 41 of the planetary gear mechanism 31 and includes an outer gear 84B.

The actuator 85 includes a worm gear 86. The actuator 85 and the worm gear 86 are disposed on an axis orthogonal to the loading cam 84. The worm gear 86 is engaged with the outer gear 84B formed on the loading cam 84. By driving the actuator 85 to rotate the worm gear 86, the loading cam 84 is rotated.

The disc-shaped plate 83 coaxial with the loading cam 84 is disposed to face the loading cam 84 at the front side. The ring-shaped piston 82 projects forward from the plate 83.

Four loading mechanisms 88 are disposed at equal intervals in a circumferential direction between the loading cam 84 and the plate 83.

As described below, the loading mechanisms 88 are mechanisms for translating the rotation of the loading cam 84 into a sliding movement of the plate 83 in the axial direction by rolling movements of rolling bodies fitted in substantially rectangular grooves along inclinations of the grooves.

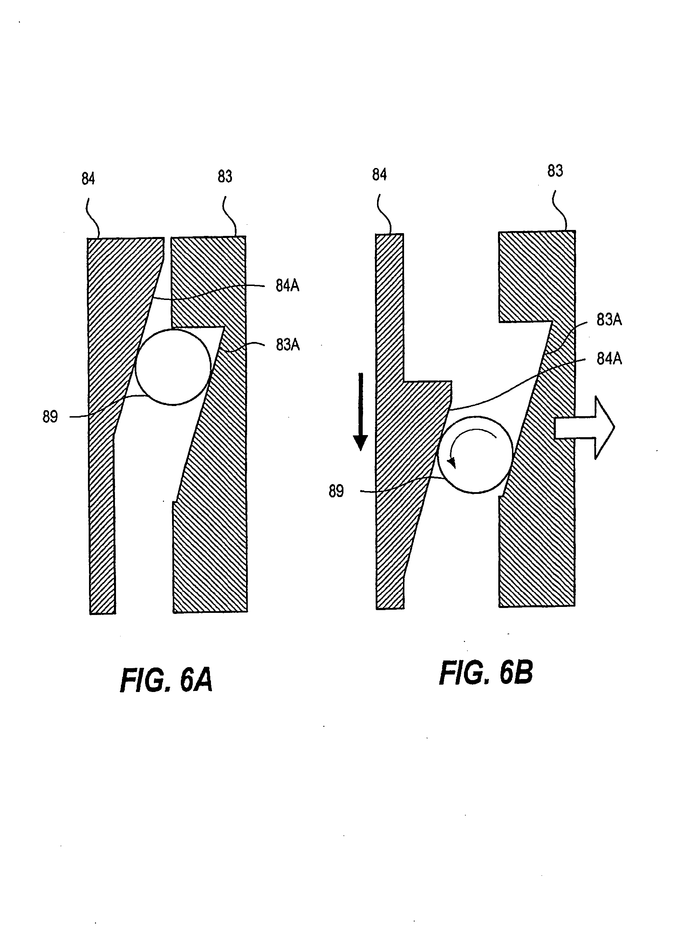

FIGS. 6A and 6B are schematic diagrams of the loading mechanism 88.

As shown in FIG. 6A, a wedge-shaped projecting portion 84A inclined toward the plate 83 is formed on the front surface of the loading cam 84. The plate 83 is formed with a wedge-shaped and inclined groove portion 83A at a position facing the projecting portion 84A. A spherical or roller-shaped rolling body 89 is so fitted in the groove portion 83A as to be rollable in a rotating direction of the loading cam 84. The rolling body 89 is sandwiched between an inclined surface of the projecting portion 84A and that of the groove portion 83A.

When the high brake 33 is released, the rolling body 89 is sandwiched between a lower position of the inclined surface of the projecting portion 84A and a deep position of the groove portion 83A as shown in FIG. 6A. In this state, the plate 83 and the piston 82 move toward a releasing side of the multiple-disc clutch 81 to release the high brake 33.

When the high brake 33 is engaged, the worm gear 86 is rotated by the actuator 85 to rotate the loading cam 84 at a predetermined angle in a predetermined direction (e.g. clockwise).

Then, as shown in FIG. 6B, the rolling body 89 rolls according to the rotation of the loading cam 84 and moves to a position between a high position of the inclined surface of the projecting portion 84A and a shallow position of the groove portion 83A. As compared with FIG. 6A, the plate 83 moves toward the engaging side of the multiple-disc clutch 81 relative to the loading cam 84.

As a result, the piston 82 presses the multiple-disc clutch 81 to engage the high brake 33. The engagement force of the high brake 33 is controlled by a sliding amount of the plate 83 in the axial direction, i.e. a rotating angle of the loading cam 84.

The loading cam 84 is rotated by the worm gear 86 disposed on the orthogonal axis. The rotation of the loading cam 84 and the movement of the piston 82 are irreversible. The piston 82 can be moved back and forth by the loading cam 84, but the loading cam 84 cannot be rotated by moving the piston 82.

By the above construction, the loading cam 84 does not rotate regardless whether the actuator 85 is operation or not and the angle of the loading cam 84 does not change after the high brake 33 is controlled and set in the engaged state. Thus, even if the supply of power to the actuator 85 is stopped, the engaged state of the high brake 33 is maintained.

The low brake 34 is similarly constructed. Accordingly, after the planetary gear mechanism 31 is interlocked after the high brake 33 and the low brake 34 are controlled and set in the engaged states, the engaged states can be maintained even without operating the actuators 85, 95.

The operation of the parking mechanism of the second embodiment is similar to that of the first embodiment shown in FIG. 3.

If the process proceeds to Step S30 as a result of determining the conditions of Steps S10 and S20 of FIG. 3, the controller 21 instructs the control circuit 23 to engage the high brake 33 and the low brake 34. The control circuit 23 determines driving amounts of the actuators 85, 95 of the high brake 33 and the low brake 34 in accordance with this instruction and outputs command signals. By this output, the high brake 33 and the low brake 34 are engaged.

In Step S40, the controller 21 determines whether or not the parking operation has been completed based on whether or not the high brake 33 and the low brake 34 have been engaged. For example, the controller 21 determines the completion of the parking operation when a condition is satisfied such as a condition that the rotating angles of the loading cams 84, 94 have reached the predetermined angles by instructions of the actuators 85, 95 of the high brake 33 and the low brake 34.

The other controls are similar to those in FIG. 3.

As described above, in the second embodiment, the parking mechanism of the transmission 30 is realized similar to the first embodiment by engaging both of at least two interlock friction elements (high brake 33 and low brake 34) that are engaged to set the interlocked state.

Since all parts for the parking mechanism are omitted in the transmission 30, the transmission 30 can be miniaturized and manufacturing cost thereof can be reduced.

Since the engagement of the interlock friction element is controlled by the power-driven actuator 85, the hydraulic pump 24 is not necessary and, hence, the part can be further omitted.

The engagement of the interlock friction element is controlled by the worm gear 86 and the loading mechanism 88. Even if the functions of the vehicle stop due to a key-off operation and the operations of the controller 21 and the like stop, the interlock friction element can be maintained in the engaged state.

It goes without saying that the present invention is not limited to the above embodiment and various changes and modifications within the scope of the technical concept thereof are embraced thereby.

For example, although the vehicle is an EV using the motor 20 as a driving force source in the first or second embodiment, it may be a vehicle using an internal combustion such as an engine as a driving force source. Also in vehicles using an internal combination as a driving force source, gas mileage can be improved and manufacturing cost can be reduced by miniaturization and weight saving.

Although the transmission 30 is constructed by the planetary gear mechanism 31 including the first ring gear 45, the second ring gear 46 and the stepped pinion 43, the construction of the transmission 30 is not limited to this. A parking mechanism can be realized by providing the same constructions as the high brake 33 and the low brake 34 described above in a conventional step transmission to maintain engaged states of interlock friction elements which are engaged to interlock the step transmission and maintaining the step transmission in an interlocked state.

Although the interlock friction elements (high brake 33 and the low brake 34) are described as multiple-disc brakes, they may be band brakes which stop the rotation of ring gears by fastening forces of bands wound around the outer peripheries of the ring gears.

This application claims priority based on Japanese Patent Applications No.2010-115110, filed with the Japan Patent Office on May 19, 2010, and No.2011-100943, filed with the Japan Patent Office on April 28, 2011, the entire contents of which are incorporated into this specification by reference.

## Claims

1. A parking mechanism of a transmission (30) with a planetary gear mechanism (31) for speed changing and outputting the rotation of a driving force source (20), comprising:
a plurality of friction elements (33, 34) which change a speed ratio of the planetary gear mechanism (31) by being engaged or released; and
engaging means (21) adapted to engage the friction elements (33, 34);
wherein the engaging means (21) adapted to maintain at least two interlock friction elements (33, 34), which are engaged to interlock the transmission (30), out of the plurality of friction elements (33, 34) in engaged states when the operation of the driving force source (20) stops due to a key-off operation.

2. The parking mechanism according to claim 1, wherein:
the engaging means (21) includes springs (64, 74) for biasing the plurality of friction elements (33, 34) in engaging directions and hydraulic supply means (24) adapted to supply hydraulic pressures to release the plurality of friction elements (33, 34); and
after the supply of the hydraulic pressures from the hydraulic supply means (24) is stopped, the at least two interlock friction elements (33, 34) are maintained in the engaged states by biasing forces of the springs (64, 74).

3. The parking mechanism according to claim 1, wherein:
the engaging means (21) is such that engagement forces of the plurality of friction elements (33, 34) are controlled by a power-driven actuator (85) and the at least two interlock friction elements (33, 34) are maintained in the engaged states after the supply of the power to the power-driven actuator (85) is stopped.

4. The parking mechanism according to claim 3, wherein:
the engaging means (21) further includes:
a worm gear (86),
a loading cam (84) disposed on an axis orthogonal to the worm gear (86) and including an outer gear (84B) engaged with the worm gear (86),
a plate (83) which slides in an axial direction of the loading cam (84) as the loading cam (84) rotates, ,and
a piston (82) which moves to engage or release the plurality of friction elements (33, 34) by a sliding movement of the plate (83), thereby controlling
the engagement forces of the plurality of friction elements (33, 34);
the power-driven actuator (85) rotates the worm gear (86) by being power driven; and
the piston (82) moves by the driving of the power-driven actuator (85), whereby the at least two interlock friction elements (33, 34) are engaged.

5. The parking mechanism according to any one of claims 1 to 4, wherein:
the transmission (30) includes:
an input shaft (41) to which a driving force from the driving force source (20) is input,
a sun gear (42) coupled to the input shaft (41),
a stepped pinion (43) in which a first gear (43A) engaged with the sun gear (42) and a second gear (43B) are coupled coaxially,
a first ring gear (45) engaged with the first gear (43A),
a second ring gear (46) engaged with the second gear (43B),
a carrier (44) coupled to the stepped pinion (43) and adapted to output a revolving motion of the stepped pinion (43),
a case (32) for housing the sun gear (42), the stepped pinion (43), the first ring gear (45), the second ring gear (46) and the carrier (44),
a first brake (33) for stopping the rotation of the first ring gear (45), and
a second brake (34) for stopping the rotation of the second ring gear (46);
and
the engaging means (21) interlocks the transmission (30) by maintaining the first and second brakes (33, 34) in engaged states when the operation of the driving force source (20) stops due to a key-off operation.
